# EUROPEAN PATENT SPECIFICATION

(11) **EP 4 017 328 B1**
(45) Date of publication and mention of the grant of the patent: **07.06.2023**
(21) Application number: 20727713.8
(22) Date of filing: 30.04.2020
(51) Int. Cl.: A47J 42/40

(54) **GROUND COFFEE ANTICLUMPING DEVICE**
VORRICHTUNG GEGEN DAS VERKLUMPEN VON GEMAHLENEM KAFFEE
DISPOSITIF PRÉVENANT L'AGGLUTINATION DE CAFÉ MOULU

(30) Priority: 21.08.2019 IT 201900014904
(43) Date of publication of application: 29.06.2022
(73) Proprietor: CMA Macchine per Caffè S.r.l., 31058 Susegana (TV) (IT)
(72) Inventor: COLIZZA, Daniele, 20080 Casarile (MI) (IT); PACHI, Simone, 20080 Casarile (MI) (IT)
(74) Representative: Cammareri, Emanuele
(86) International application number: PCT/IB2020/054061
(87) International publication number: WO 2021/033032

(56) References cited:
- GB-A- 2 570 266
- US-A- 4 813 622
- US-A- 5 950 941

## Description

The invention relates to a device for processing coffee beans comprising:
at least one electric motor,
at least one primary tank,
at least one grinding chamber comprising one or more rotating bodies connected to said at least one electric motor for the reduction of the grains and with consequent production of coffee powder,
one or more outlet ports connected to one or more ducts for the discharge of said powder from the grinding chamber optionally for adducting to an external container for containing the powder,
said ducts being equipped with an element for regulating the outflow of said coffee powder.

Said state-of-the-art device comprises a system of simple construction, low production costs and low operating costs which can facilitate the collection of the powders allowing a constant and homogeneous flow and capable of limiting the formation of agglomerates of coffee powder within the organs and orifices of the device with consequent benefits in terms of quality of the finished product and overall functioning of the coffee grinding device.

The known art of coffee grinders, both for professional and domestic use, indicates that the grinding, i.e. the reduction due to the mechanical effect of the coffee beans to powder, is performed by a special grinding organ usually comprising a mobile part, also indicate by word grinder, cylindrical or conical in shape rotating axially within a fixed cylindrical body of a shape suitable for containing said grinder and forming a grinding chamber;
one or more internal surfaces of said grinding chamber are provided with knurling and / or ditches operating the grinding of the grains.

The application of rotary motion to the grinder involves a transfer of energy to the coffee beans with consequent decomposition into powders of different sizes; said rotary motion is usually consequent to the actuation by an electric motor possibly via a gearmotor and a drive shaft but other types of movement can be provided to the same method for reducing grains.

Furthermore, part of the energy is used for the expulsion of said powders from the grinding chamber that as a whole is provided with one or more orifices to adduct the ground coffee to an external collection tank according to a path that comprises at least one connecting conduit.

The prior art provides for coupling to the connecting pipe an adjustment element for controlling the coffee powder, usually in order to slow down the flow of said powder, for example by means of a flat surface-shaped deflector compatible with the section of the connection conduit and arranged axially to it with at least a degree of freedom which allows its manual orientation to optimize the effect on the flow of powder leaving the grinding chamber.

A known alternative of this approach is provided in document CH656300 that provides a deflector comprising a flat-shaped deflecting flap arranged free to tilt on a "U"-shaped support body, being said deflector flap of dimensions compatible with the section of the connection duct and positioned so as to deviate the flow of coffee powders autonomously based on the contrast between the force that said flow of powders exerts on said flap and the force that opposes accordingly the gravitational effect of the return force that is created when the flap moves from the vertical rest position.

Another situation commonly present during the grinding process derives from the presence of electrostatic charges in the ground coffee as a result of the friction between the coffee beans and the grinding organs and this causes the generation coffee particles with non-controllable dimension expanding in all directions rather than in the form of an easily adductable flow towards the final collection point. In this sense, a known approach provides for combining a membrane at the outlet of the grinding chamber such as to act as a stabilizing element towards the aforesaid electrostatic charges due to the contact that occurs between said membrane and said powders leaving the grinding chamber. In this field, document US 5950941A discloses a coffee grinder provided with arrangements to reduce the frequency and duration of cleaning apparatus for the grinding of materials where chaff fines from the grinding process accumulate on the exterior surfaces of the grinding apparatus due to the induced electrostatic charge on the ground particles exiting the grinder.

The technique described heretofore has drawbacks in the treatment of powders, drawbacks that occur most when grinding occurs at a high rate and with intensive operation; in this case, the high outlet pressure and the considerable quantities of coffee can lead to situations of undesired accumulation of the powders in the end part of the grinding chamber and / or on the profile of the orifices adducting the flow of coffee; said accumulations can occur temporarily and persist until the shape and / or size reach a state such as to be removed due to the increasing force brought by the overall flow of the powders, or said accumulations can be in shape and consistence such as to require manual or otherwise specific intervention for removal. Among the drawbacks deriving from said situations of unwanted accumulation, the presence of lumps in the coffee powder and / or overheating of the coffee grinder can be highlighted due to the permanent accumulations leading to alterations in the characteristics of the ground coffee and / or consequences on the operation of the coffee grinder itself, including longer stop time for maintenance and reduction of the life of one or more organs subjected to greater operating stress.

The presence of agglomerates exiting the grinding chamber also has drawbacks with respect to any weighing systems or in general with the functioning of the mechanisms aimed at achieving a precise quantity of ground coffee downstream of the grinding process. This is particularly evident when the grinding takes place in single doses, immediately before the infusion operation with water, and said external container for containing the powder comprises the filter holder involved in said infusion operation with water. In this application context, where a few grams of coffee are involved for each grinding, the presence of uncontrolled agglomerates in the coffee powder represents an important obstacle to achieving the precise quantity of coffee for each single dose with all the negative consequences on the final result such as, for example, the poor quality of the brewed coffee, the taste of the coffee, the difficulty in obtaining a product with constant characteristics over time and / or the economic aspects deriving from incorrect quantities.

In order to overcome the drawbacks described above, the present invention provides for realizing a device for processing coffee beans comprising:
at least one electric motor,
at least one primary tank,
at least one grinding chamber comprising one or more rotating bodies connected to said at least one electric motor for the reduction in grains and with consequent production of coffee in powder,
one or more outlet ports connected to one or more ducts for the discharge of said powder from the grinding chamber optionally for adducting to an external container for containing the powder,
said ducts being equipped with an element for regulating the outflow of said coffee powder,
and said element being characterized by having a conformation that develops longitudinally within said ducts along a path with a growing section in the direction of the end facing the discharge, presenting a plan shape similar to a circular sector of increasing angular amplitude that extends along the internal web of the exhaust pipe,
and said element being arranged for the regulation of the outflow characterized by further comprising a mechanical member for the control of the flow of the powders, having a shape compatible with the web surface of the grinding chamber and of a shape compatible with the element for regulating the flow of powder, equipped with a specific degree of elasticity and suitably interposed between an outlet port of said grinding chamber and the corresponding inlet port of the element for adjusting the flow of powder in so as to act on the dynamics of the moving powder flow, being able to limit the flow rate more or less partially as a function of the dynamic behavior of said powder when said device for processing coffee beans is in action.

The two main features of the invention therefore combine the effects of a hollow element, the internal conformation of which is not linear but is articulated along a predetermined irregular path with variable section, with the effects of a partial controlled occlusion of the orifice from which the ground coffee powders come out, opening a passageway that can vary according to the conditions in which the coffee grinder device is operating.

As mentioned, the invention has the aim of canceling or in any case reducing to a minimum the formation of agglomerates of coffee powder along the entire path that goes from the outlet port of the grinding chamber to the discharge point where the coffee powders are expelled outside the coffee grinder device in a possible tank or in another location that is not part of the scope of this invention.

Unlike the known art, where the flow of coffee follows a linear path, the invention includes an element which forces the flow of powders within a path of complex shape, with variable section, such complex shape being in each plane transversal to the flow such as to prevent local densities of powder and this complex shape is as a whole capable of slowing down said flow in a sort of helix that winds inside said element for the regulation of the flow and ends in the end arranged to house the final duct for adducting the powder as described above.

In a possible alternative embodiment, the helix described above is such as to make a rotation of half a round angle but it is possible to provide larger or shorter angles to optimize the control effects also according to the overall geometries of the device object of the invention.

The second main characterization of the invention provides a further control on the formation of the agglomerates of powder by acting in the vicinity of the grinding chamber and in particular in adherence to the outlet orifice, having taken for granted that in the case of multiple outlet orifices they will provide for multiple control bodies or an assembly of these. Said control acts by making a partial occlusion of the coffee powder path being said occlusion performed in a controlled manner and by means of elements with elastic characterization such as to trigger vibrations and oscillatory movements when the force of the powder flow is such to prevail on the elastic force of said elements.

In an execution alternative two partially overlapping elements are used and possibly formed with materials of different elasticity in order to improve the effects by combining the different characteristics of said materials which are chosen according to their use without however imposing the choice of specific materials; in this sense, specific embodiments are possible that include the use of silicones and harmonic steels.

A preferred implementation solution provides that said device for processing coffee beans includes a system for controlling the weight of the ground coffee, said weight being detected at the outlet from said one or more ducts for unloading by means of a weighing mechanism that in this embodiment comprises at least:
a support fork for a filter holder to be loaded with ground coffee, said support fork being preferably positioned near said one or more outlet ports,
a load cell mechanically connected to said fork,
a microprocessor that controls the operation of the grinders to determine a desired final dose of ground coffee inside said filter holder,
a control firmware, contained in said microprocessor to support a weighing program which provides in succession the following operating phases:
   a) activating the electric motor to obtain the grinding of the coffee by the grinders;
   b) continuously checking, through said load cell, the detected weight of ground coffee that, through said unloading ducts, reaches the filter holder resting on said fork;
   c) determining the stopping of the electric motor when said detected weight reaches the predetermined value.

The characteristics of the invention and the advantages deriving from it will become clearer from the following detailed description of some possible non-exhaustive or limiting execution examples, illustrated with the support of the accompanying drawings in which:
Fig. 1 shows an overall side view of the device for processing coffee beans including the grinding chamber, rotating bodies for the reduction of the grains, the element for regulating the outflow object of the invention and the duct for conveying coffee powder.
Fig. 2 is a perspective view of a left cross section view of the device as a whole said view being centered on the element for regulating the outflow in which an internal view of said element is shown.
Fig. 3 is a perspective view of a right cross section of what is shown in figure 2.
Fig. 4 is a three-dimensional view of a possible embodiment of the invention with an observer positioned on the grinding chamber side from which a part of the mechanical member for controlling the flow of powders is visible.
Fig. 5 is a three-dimensional view of a possible embodiment of the invention with an observer positioned on the duct side for adducting the powders, from which part of the conformation of the element for regulating the outflow is visible.
Fig. 6 is a three-dimensional view of a possible embodiment of the element for the flow adjustment with an observer positioned on the grinding chamber side from which part of the shape of the element for the flow adjustment is visible.
Fig. 7 shows three cross sections along the axis of flow of the flow at different heights of the element for regulating the outflow.
Fig. 8 shows four sections at different heights of the element for adjusting the outflow according to the plane orthogonal to the surface of the powder inlet port.
Fig. 9 shows other two-dimensional views of the element for adjusting the flow from the various sides and also a longitudinal section of the same.
Fig. 10 shows two further three-dimensional views of the element for regulating the outflow with surface and internal details.
Figures 11 and 12 illustrate the alternative of the mechanical member for flow control in a possible embodiment including two elastic sheets of different material and U-shaped notch that outlines a flexible tab with further beveled edges for flow control of the powders.
Figure 13 shows an embodiment of the main body of a coffee grinder comprising a grinding chamber, an outlet port and a seat for containing the above mentioned plates.
Figures 14 and 15 show the combination of the two sheets of figure 11 and 12 with the body of the coffee grinder shown in figure 13.

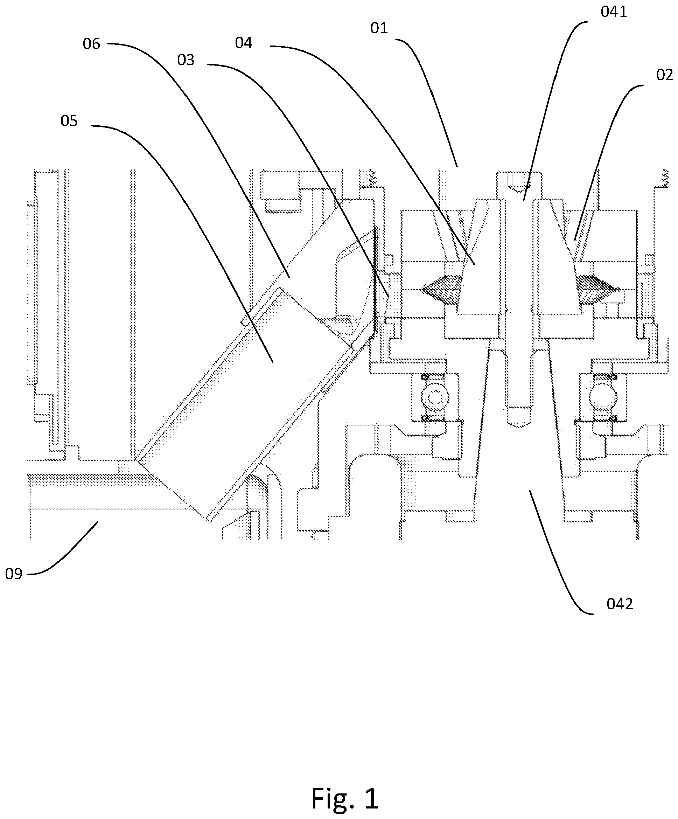

With reference to the figures mentioned above, in the cross-section of figure 1 it is possible to observe part of the main members included in this embodiment of coffee grinder in which the raw material, here understood as a synonym of coffee beans, initially contained in a containing tank 01, enters by the action of gravity or by other form of movement in grinding chamber 02 to be treated in the manner provided for grinding and finally is adducted in the form of powder inside an appropriate container. For the purpose of the description of the present invention, the mechanisms and / or methods related to the preliminary filling stages of the primary tank are not illustrated, nor are the mechanisms for emptying the coffee powder once reduced to the desired shape; it is understood that said filling and control of the tank level can be performed and / or controlled manually or managed in a semiautomatic or automatic way by a dedicated system without bringing significant consequences to the grinding process in the chamber or to the flow of the powder of outgoing coffee. The present description also goes beyond treating the destination of the coffee powder once in the outlet tank even when said tank is part of a following device such as for example a machine for filtering and producing liquid coffee.

As mentioned, it is in grinding chamber 02 that the grains entering primary tank 01 are pulverized and the process related to this embodiment takes place by mechanical action via a rotating grinder 04 arranged axially to said grinding chamber 02 and driven by an electric motor 042 located in the lower part of the coffee grinder; the rotary motion of said motor is optionally adapted in terms of angular speed by a gearmotor and transferred to the grinder by way of transmission shaft 041, since said transmission shaft can be a cylindrical-shaped element positioned axially to the motor and rigidly constrained to machine 04.

In addition to provide the rotary motion, machine 04 and the grinding chamber are shaped and equipped with special knurls or indentations so as to present surfaces, loops and spaces such as to make effective the reduction of the size of the grains under the rotary action of the grinder and furthermore the shaping is such that only once the coffee has been pulverized can it reach an outlet 03 and consequently flows through the element for regulating the outflow 06, part of the present invention, to then reach duct conveying 05 and finally ending tank 09 under the force deriving from the turbulence following the rotation of grinder 04.

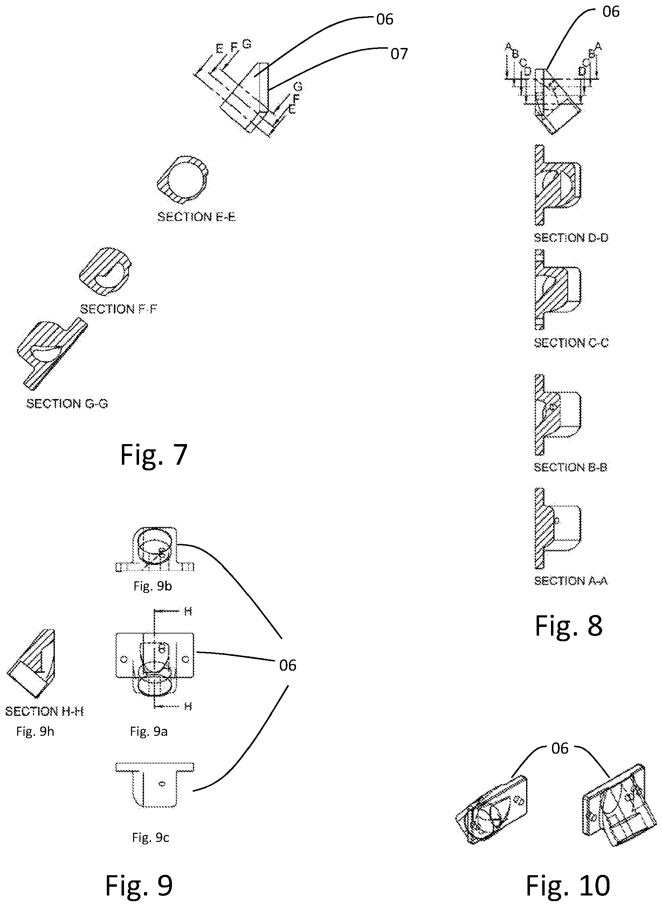

The shape of the element for the regulation of the outflow 06, object of the present invention, is defined to cancel or in any case reduce the formation of agglomerates of coffee powder that in the absence of said element would be created due to the high output speed and the electrostatic charges released during the grinding process; some details of the present embodiment are visible in the cross-section of figure 1 while the complete overview including also the sections in the various parallel and orthogonal planes is illustrated in figures 7, 8, 9.

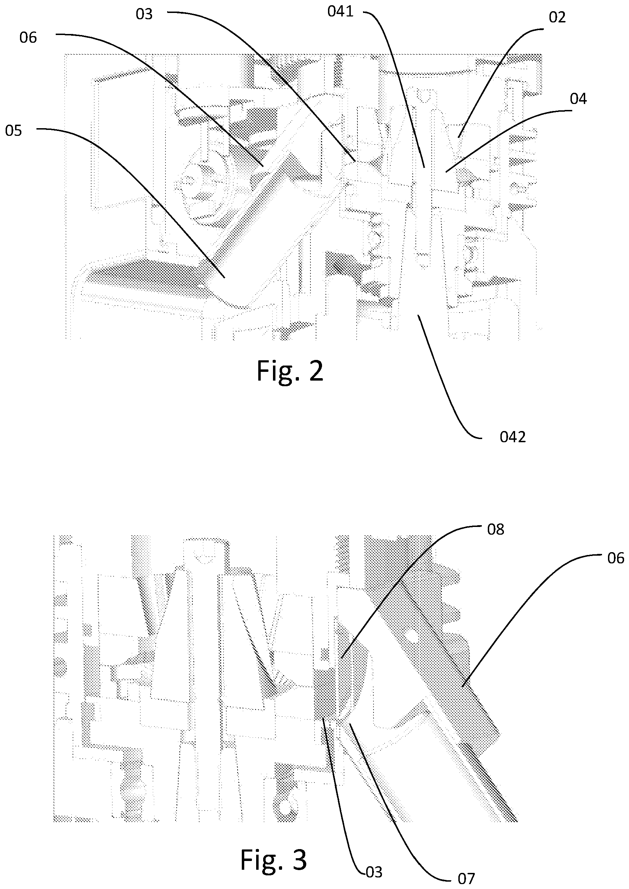

Figure 2 shows a second view of the overall device according to an axonometric cross-section which enriches the graphic description of the previous figure illustrating the details already introduced from different angles.

Figure 3 shows a close-up perspective of the overall device with axonometric view from the left and introduces the second innovative element which is claimed as part of the present invention, said element 08 being a member for controlling the flow of powders out of grinding chamber 02 and realized in this specific execution in the form of a double elastic sheet interposed between outlet port 03 of said grinding chamber and inlet port 07 of the element for adjusting powder flow 06. In consideration of the perspective adopted in this figure and of the overall view, said element 08 in its embodiment of double-plate is visible only partially and not in its entirety but this representation contributes to the presentation of the operating method comprising a partial occlusion of the coffee powder path characterized by a series of elements with elastic properties, possibly different from element to element, said elements having similar dimensions and preferably decreasing in the direction of the powder flow and said elements being superimposed or side by side and only partially constrained so as to be able to complete a predetermined movement when the force of the powder flow is such as to prevail over the elastic force by said plates.

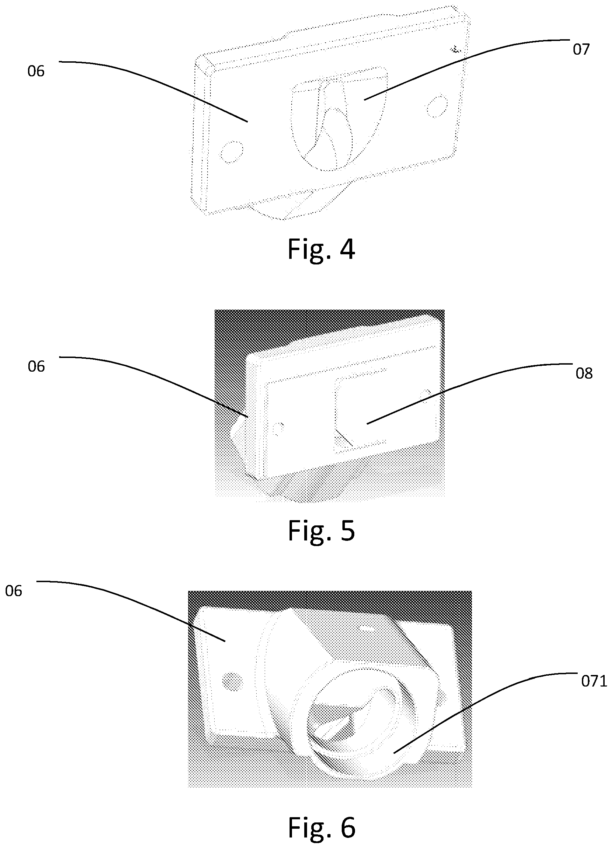

Figure 4 shows, for this embodiment, a view of the element for adjusting the outflow 06 in a three-dimensional perspective in which the observer is positioned so as to see the surface facing the main body of the coffee grinder; in this embodiment inlet port 07 is characterized by a geometric figure similar to an elliptical sector, preferably 180 ° along the major axis, deriving from the intersection of a cylinder, preferably with a circular base, with a plane whose normal is inclined by a predetermined angle with respect to the axis of symmetry of said cylinder and with a second plane whose normal is in the area resulting from said intersection.

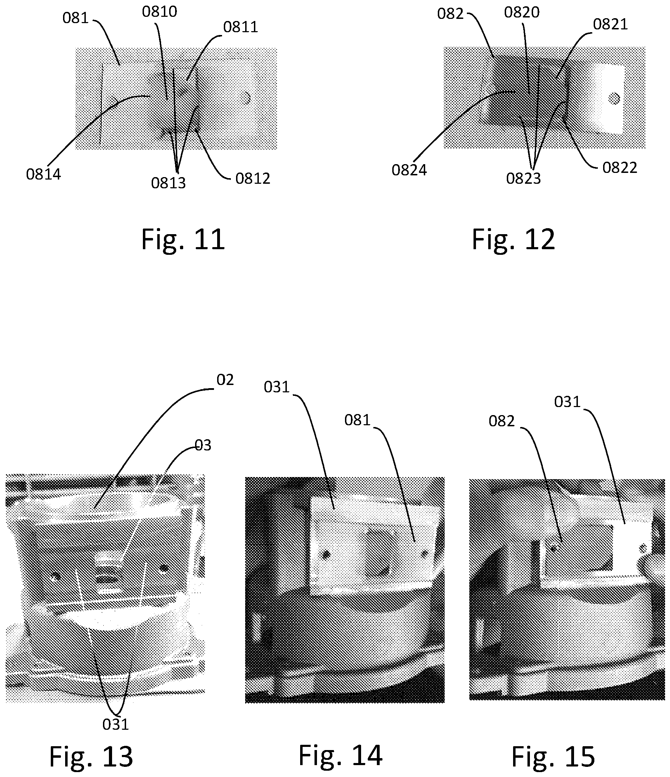

Figure 5 shows, for this embodiment, a view of the assembly of the two members forming part of the invention, or of the element for regulating the outflow 06 and of the mechanical member for controlling the flow 08 in a three-dimensional perspective in which the observer is positioned in such a way as to see the surface in contact with the main body of the coffee grinder, said body being the grinding chamber or an intermediate body placed between said grinding chamber and said element of outflow regulation. A detailed illustration of this embodiment of the mechanical member for controlling the flow is present in figures 14 and 15, where the two elements previously introduced comprise at least one polymeric base element, preferably preformed silicone, and at least one metal-based element, preferably harmonic steel.

Figure 6 shows a further view of flow regulation element 06, in a three-dimensional perspective in which the observer is positioned in such a way as to see the outlet port 071 of said element configured to be connected to the conduit for the adduction of the powders (not shown here) and from which the coffee powders come out after having traveled the internal portion of said flow regulation element 06, the particular embodiment of which is detailed in figures 7 to 10 which present various sections in the transverse and longitudinal plane of said regulation element 06 in a sequence in which the flow of the powders leaving the grinding chamber travels along a path which imparts the rotation of said powders and continues up to the maximum opening at the inlet of the duct for the adduction of the powders in a possible external tank.

In order to achieve the predefined purpose, the invention also provides for the action of a mechanical member having shapes and elastic properties such as to regulate the flow of powders leaving the grinding chamber while overcoming the limit of the prior art, suffering said prior art from the phenomenon of accumulation of coffee on the membrane involved for that purpose and consequent formation of lumps which become part of the ground coffee, lowering its quality and worsening its aesthetic appearance; in this precise embodiment, the aim is achieved by means of at least two plates, suitable for being positioned in partial occlusion of the outlet port 03 and shaped so as to generate a force consequent to the elasticity of the materials which, opposed to the force generated by the flow of air and powder exiting the grinding chamber, cause a removal of said plates from the rest position, increasing the size of the surface useful for the passage of said powders in a motion which hinders the stationing of the ground coffee on the edges of the orifices. In particular, this embodiment provides that the two plates are made up of rectangular foils as shown in figures 11 and 12 and in particular:

Fig.11 shows a plate 081 made of elastic material such as silicone, provided with a notch with three 90° inclined segments to create a "U" shape 0813 such as to define a tab 0810 inside said foil, said notch being defined so as to make said tab positioned parallel to the foil, said being notch defined so as to leave said tab constrained by a linear profile 0814 to foil 081, which linear profile constitutes an inflection line of said tab.

According to an embodiment, tab 0810 is further provided with a bevel 0811 between the upper edge oriented perpendicular to the line of bending and the edge of the tab oriented parallel to said line of bending.

In a further embodiment, the tab can instead be further provided with a bevel 0812 between the lower edge oriented perpendicular to the line of bending and the edge of the tab oriented parallel to said line of bending.

The embodiment shown in the figures refers to an embodiment variant in which both the aforementioned bevels 0811 and 0812 are provided.

According to an additional feature, one or both of the said bevels are of an almost triangular shape.

Still according to an additional embodiment which can be provided in any combination or sub-combination with the previous ones, the two bevels have different dimensions.

In particular in this embodiment, tab 0810 is made in one piece with foil 081 by notching and / or molding.

Fig.12 shows a foil 082 made of elastic material such as steel, provided with a notch with three 90° inclined segments to create a "U" shape 0823 such as to define a tab 0820 inside said plate, said notch being defined so as to make said tab positioned parallel to foil 082, said notch being defined so as to keep said tab constrained by a linear profile 0824 to foil 082, which linear profile constitutes a bend line of said tab.

Like the tab of the embodiment according to Figure 11, tab 0820 can also be further provided with a bevel 0821 between the upper edge oriented perpendicular to the line of bending and the edge of the tab oriented parallel to said line of inflection and / or a bevel 0822 between the lower edge oriented perpendicularly to the line of bending and the edge of the tab oriented parallel to said line of bending.

Always similarly to the example of figure 11, also in this case the particular embodiment shows the aforementioned bevels 0821 and 0822 of an almost triangular shape and further of a mutually different size.

Also in the case of the example of figure 12, tab 0820 is made om a single body with the foil by notching and / or punching and / or molding.

Said foils and in particular tabs 0810 and 0820 have similar shapes with different dimensions and are designed to be overlapped and, as said, are used near the outlet port 03 of grinding chamber 02 to partially occlude and control the flow of ground coffee powders.

In particular, said plates are positioned in seat 031 suitably defined on the web surface of the grinding chamber 02 and obtained around outlet port 03 as shown in figure 13 from which it is also possible to note the flat shape of said seat 031 as chosen in this embodiment.

Figure 14 shows silicone foil 081 positioned in seat 031 while figure 15 shows steel plate 082 positioned in seat 031; in this embodiment it is provided that said steel plate 082 is superimposed on said silicone foil 081, thus being more distant from outlet port 03, and in contact with the flat surface of the element for regulating the outflow 06 as shown in figure 4 and following.

The overlap described so far contributes to forming the mechanical member for controlling the flow of powders 08 which, in this embodiment, uses the dimensional difference between notches 0813 and 0823 and between bevels 0811 and 0821, 0812 and 0822 to form a lip of silicone material which is created along all or part of the profile of tab 0810 as a result of the part of silicone material which is not supported by the metallic material in the direction of the flow of the powders, thus creating a surface capable of moving when pressed by the flow of air and powder, the movement of said surface preventing the excess deposit of the coffee powders, which is a scope of the present invention.

In this way, according to what described above, various advantages are obtained including avoiding the agglomerates of coffee powder formed by the progressive accumulation of said powders and coming off when a critical mass is reached and also the further benefit of avoiding overheating of one or more parts of the grinding chamber with consequent impacts both in terms of alteration of the organoleptic characteristics of the ground coffee, and in terms of damage and / or reduction of the operating life of the mechanical and / or electrical parts of the coffee grinder.

From what has been described, it is evident that the apparatus according to the invention achieves the set scopes.

The object of the invention is susceptible of numerous modifications and variations, all of which are within the inventive concept expressed in the attached claims.

## Claims

1. Device for processing coffee beans, comprising:
at least one primary tank (01),
at least one grinding chamber (02) comprising one or more rotating bodies (04) to reduce beans and to consequently produce powdered coffee,
one or more outlets (03) connected to one or more discharge ducts (05) for discharging said powder from the grinding chamber (02), optionally for adducting it to an outer tank (09) for containing the powder,
said discharge ducts (05) being equipped with an element (06) to adjust the outflow of said coffee powder,
said element having a shape that develops longitudinally inside said discharge ducts (6) along a path with a section that increases in direction of the end facing the discharge with a plan shape similar to a sector of a circle of increasing angular width that extends along the inner web of the discharge duct (05),
said element (06) for adjusting the outflow further comprising a mechanical member to control the flow of powders (08), of a shape compatible with the web surface of the grinding chamber (02) and of a shape compatible with the element for adjusting the powder flow (06), equipped with a specific degree of elasticity and appropriately interposed between an outlet (03) of said grinding chamber (02) and the corresponding inlet (07) of the element for adjusting the powder flow (06) so as to act on the dynamics of the powder flowing, thus being able to more or less partially limit its flow rate depending on the dynamic behavior of said powder when said device for processing coffee beans is operating.

2. Device for processing coffee beans according to claim 1, wherein the path with an increasing section that extends along the web inside the element for adjusting the outflow (06) has an angular width between the range from 90 to 270° and preferably of 180°.

3. Device for processing coffee beans according to one or more of the preceding claims, wherein the mechanical member (08) to control the flow of the powders consists of the overlapping and/or placing side by side at least two elements (081;082) distinguished by different elastic coefficients of the material composing them and obtained in a shape such as to have two different surface areas countering the powder flow running from the grinding chamber (02) to the outer discharge during the normal operations of the device for processing coffee beans.

4. Device for processing coffee beans according to claim 3, wherein the two or more overlapping surfaces positioned to counter the powder flowing from the grinding chamber (02) to the outer discharge during the normal operations of the device for processing coffee beans has surface areas that are decreasing in direction of the powder flow and that are contextually made of materials having properties such as to offer greater elastic resistance; said overlapping is obtained so that to create one or more lips formed by the non-overlapping area of said surfaces, said lips being able to offer coefficients of elastic resistance that increase in the longitudinal direction and in the travel direction of the powders.

5. Device for processing coffee beans according to one or more of the preceding claims, wherein the mechanical member (08) to control the flow of the powders consists of the overlapping of a polymer-based element, preferably pre-formed silicone, and of a metal-based element, preferably harmonic steel.

6. Device for processing coffee beans according to one or more of the preceding claims 3, 4 and 5 when dependent on claims 3, 4, wherein the two or more overlapping surfaces positioned to counter the flow of the powder running from the grinding chamber (02) to the outer discharge have plan shaped areas and preferably rectangular, designed so that to partially or fully cover the outlet port of said grinding chamber useful for the passage of the flow of powders, said area being obtained by means of at least one cut, preferably to create a tab of rectangular shape (0810;0820) so that to have at least one passage port, possibly in the form of a triangular bevel (0811, 0812;0821,0822)of at least one angle of said tab.

7. Device for processing coffee beans according to one or more of the preceding claims, wherein the coffee powder is repeatedly produced in a predetermined amount, also defined dose, said device being provided with a mechanism for controlling the weight of said ground coffee dose, comprising
a support fork of a filter-holder to be loaded with ground coffee, said support fork preferably being positioned in proximity of said one or more outlets,
a load cell mechanically connected to said fork
a microprocessor that controls the operations of the grinders to determine a final desired dose of ground coffee inside said filter-holder, preferably by means of control firmware contained in said microprocessor.

## Patentansprüche

1. Vorrichtung zum Verarbeiten von Kaffeebohnen, umfassend mindestens einen Primärbehälter (01), mindestens eine Mahlkammer (02) mit einem oder mehreren rotierenden Körpern (04) zum Mahlen der Bohnen und somit zur Herstellung von Kaffeepulver, einen oder mehrere Auslässe (03), die mit einem oder mehreren Auslasskanälen (05) verbunden sind, um das Pulver aus der Mahlkammer (02), gegebenenfalls in einen externen Behälter (09), der das Pulver enthält, auszutragen, wobei die genannten Auslasskanäle (05) mit einem Element (06) zum Regulieren des Ausflusses des Kaffeepulvers versehen sind, wobei das genannte Element (06) eine Form aufweist, die sich in Längsrichtung innerhalb der Auslasskanäle entlang einer Bahn mit einem Querschnitt entwickelt, der in Richtung des dem Auslass zugewandten Endes zunimmt, mit einer Grundrissform, die einem Kreissektor mit zunehmender Winkelbreite ähnelt, die sich entlang des inneren Stegs des Auslasskanals (05) erstreckt, wobei das genannte Element (06) zur Einstellung des Auslasses außerdem ein mechanisches Element (08) zur Steuerung des Pulverstroms umfasst, das eine Form aufweist, die mit der Stegfläche der Mahlkammer (02) kompatibel ist, und eine Form aufweist, die mit dem Element (06) zur Einstellung des Pulverstroms kompatibel ist, das mit einem gewissen Grad an Elastizität versehen und in geeigneter Weise zwischen einem Auslass (03) der Mahlkammer (02) und dem entsprechenden Einlass (07) des Elements (06) zur Regulierung des Pulverdurchsatzes angeordnet ist, um auf die Dynamik des fließenden Pulvers einzuwirken, so dass es in der Lage ist, seinen Durchsatz je nach dem dynamischen Verhalten des Pulvers während des Betriebs der Vorrichtung zur Behandlung der Kaffeebohnen mehr oder weniger teilweise zu begrenzen.

2. Vorrichtung zum Verarbeiten von Kaffeebohnen nach Anspruch 1, **dadurch gekennzeichnet, dass** die Bahn mit einem ansteigenden Abschnitt, der sich entlang der Bahn im Inneren des Elements (06) zum Einstellen des Ausflusses erstreckt, eine Winkelbreite zwischen dem Bereich von 90 bis 270° und vorzugsweise 180° aufweist.

3. Vorrichtung zum Verarbeiten von Kaffeebohnen nach einem oder mehreren der vorhergehenden Ansprüche, **dadurch gekennzeichnet, dass** das mechanische Element (08) zur Steuerung des Pulverflusses aus der Überlappung und/oder Aneinanderreihung von mindestens zwei Elementen (081; 082) besteht, die sich durch unterschiedliche Elastizitätskoeffizienten des Materials, aus dem sie bestehen, auszeichnen und so geformt sind, dass sie zwei unterschiedliche Oberflächen aufweisen, die dem Pulverfluss entgegenwirken, der während des normalen Betriebs der Vorrichtung zum Verarbeiten von Kaffeebohnen von der Mahlkammer (02) zum äußeren Auslass verläuft.

4. Vorrichtung zum Verarbeiten von Kaffeebohnen nach Anspruch 3, wobei die zwei oder mehr überlappenden Flächen, die so angeordnet sind, dass sie dem während des normalen Betriebs der Vorrichtung zum Verarbeiten von Kaffeebohnen aus der Mahlkammer(02)zum äußeren Auslass strömenden Pulver entgegenwirken, Oberflächenbereiche aufweisen, die in Richtung des Pulverstroms abnehmen und die aus einer Kombination von Materialien hergestellt sind, die Eigenschaften aufweisen, die einen höheren elastischen Widerstand bieten; die genannte Überlappung ist so ausgeführt, dass eine oder mehrere Lippen entstehen, die durch den nicht überlappenden Teil der Oberflächen gebildet werden, wobei die Lippen in der Lage sind, elastische Widerstandskoeffizienten zu liefern, die in Längsrichtung und in der Bewegungsrichtung des Pulvers zunehmen.

5. Vorrichtung zum Verarbeiten von Kaffeebohnen nach einem oder mehreren der vorhergehenden Ansprüche, wobei das mechanische Element (08) zur Steuerung des Pulverflusses aus der Überlappung eines Elements auf Polymerbasis, vorzugsweise vorgeformtes Silikon, und eines Elements auf Metallbasis, vorzugsweise harmonischer Stahl, besteht.

6. Vorrichtung zum Verarbeiten von Kaffeebohnen nach einem oder mehreren der vorhergehenden Ansprüche 3, 4 und 5, wenn abhängig von den Ansprüchen 3, 4, wobei die zwei oder mehr sich überlappenden Flächen so angeordnet sind, dass sie dem Pulverstrom entgegenwirken, der von der Mahlkammer (02) zum äußeren Auslass fließt, ebene und vorzugsweise rechteckige Flächen aufweisen, die so angeordnet sind, dass sie die Auslassöffnung der Mahlkammer, die für den Durchgang des Pulverstroms nützlich ist, teilweise oder vollständig bedecken, wobei die genannte Fläche durch mindestens einen Schnitt, vorzugsweise um eine rechteckige Lasche (0810; 0820), um mindestens eine Durchgangsöffnung, gegebenenfalls in Form einer dreieckigen Abschrägung (0811, 0812; 0821, 0822) mindestens einer Ecke der Lasche, zu erhalten.

7. Vorrichtung zum Verarbeiten von Kaffeebohnen nach einem oder mehreren der vorhergehenden Ansprüche, wobei das Kaffeepulver wiederholt in einer vorgegebenen Menge, auch Dosis genannt, hergestellt wird, wobei die Vorrichtung mit einem Mechanismus zum Steuern des Gewichts der Dosis gemahlenen Kaffees versehen ist, der eine Stützgabel eines Filterhalters, der mit gemahlenem Kaffee zu beladen ist, wobei die Stützgabel vorzugsweise in der Nähe des einen oder der mehreren Auslässe angeordnet ist, eine Kraftmessdose, die mechanisch mit der Gabel verbunden ist, einen Mikroprozessor, der die Operationen der Mühlen steuert, um eine gewünschte Enddosis gemahlenen Kaffees innerhalb des Filterhalters zu bestimmen, vorzugsweise mittels einer Steuer-Firmware, die in dem Mikroprozessor enthalten ist, umfasst.

## Revendications

1. Dispositif de transformation des grains de café, comprenant au moins un réservoir primaire (01), au moins une chambre de broyage (02) comprenant un ou plusieurs corps rotatifs (04) pour réduire les grains et produire ainsi du café en poudre, une ou plusieurs sorties (03) reliées à un ou plusieurs conduits d'évacuation (05) pour évacuer ladite poudre de la chambre de broyage (02), et pour la conduire éventuellement vers un réservoir extérieur (09) destiné à contenir la poudre, lesdits conduits d'évacuation (05) comportant un élément (06) de réglage de l'écoulement de ladite poudre de café, ledit élément ayant une forme qui se développe longitudinalement à l'intérieur desdits conduits d'évacuation (6) le long d'une trajectoire ayant une section qui augmente dans la direction de l'extrémité faisant face à l'évacuation ayant une forme plane similaire à un secteur de cercle de largeur angulaire croissante qui s'étend le long de l'âme intérieure du conduit d'évacuation (05), ledit élément (06) de réglage de l'écoulement comprenant en outre un organe mécanique de contrôle de l'écoulement des poudres (08), de forme compatible avec la surface d'âme de la chambre de broyage (02) et de forme compatible avec l'élément de réglage de l'écoulement de la poudre (06), doté d'un degré d'élasticité spécifique et interposé de manière appropriée entre une sortie (03) de ladite chambre de broyage (02) et l'entrée correspondante (07) de l'élément de réglage de l'écoulement de la poudre (06) de manière à agir sur la dynamique de l'écoulement de la poudre, pouvant ainsi limiter plus ou moins partiellement son écoulement en fonction du comportement dynamique de ladite poudre lorsque ledit dispositif de transformation des grains de café fonctionne.

2. Dispositif de transformation des grains de café selon la revendication 1, **caractérisé en ce que** la trajectoire à section croissante qui s'étend le long de l'âme à l'intérieur de l'élément de réglage de l'écoulement (06) a une largeur angulaire comprise entre 90 à 270° et de préférence de 180°.

3. Dispositif de transformation des grains de café selon une ou plusieurs des revendications précédentes, **caractérisé en ce que** l'élément mécanique (08) de contrôle de l'écoulement des poudres consiste à superposer et/ou à placer côte à côte au moins deux éléments (081; 082) se distinguant par des coefficients élastiques différents du matériau qui les compose et obtenus sous une forme telle qu'ils présentent deux surfaces différentes s'opposant à l'écoulement de la poudre provenant de la chambre de broyage (02) vers l'évacuation extérieure pendant le fonctionnement normal du dispositif de transformation des grains de café.

4. Dispositif de transformation des grains de café selon la revendication 3, **caractérisé en ce que** deux ou plusieurs surfaces de chevauchement positionnées pour s'opposer à l'écoulement de la poudre provenant de la chambre de broyage (02) vers l'évacuation extérieure pendant le fonctionnement normal du dispositif de transformation des grains de café ont des surfaces qui sont décroissantes dans la direction de l'écoulement de la poudre et qui sont contextuellement constituées de matériaux ayant des propriétés telles qu'elles offrent une plus grande résistance élastique ; ledit chevauchement est obtenu de manière à créer une ou plusieurs lèvres formées par la zone non chevauchante desdites surfaces, lesdites lèvres étant en mesure d'offrir des coefficients de résistance élastique qui augmentent dans la direction longitudinale et dans la direction de déplacement des poudres.

5. Dispositif de transformation des grains de café selon une ou plusieurs des revendications précédentes, **caractérisé en ce que** l'élément mécanique (08) de contrôle de l'écoulement des poudres consiste dans le chevauchement d'un élément à base de polymère, de préférence en silicone préformé, et d'un élément à base de métal, de préférence en acier harmonique.

6. Dispositif de transformation des grains de café selon une ou plusieurs des revendications précédentes 3, 4 et 5 lorsqu'elles dépendent des revendications 3 et 4, **caractérisé en ce que** les deux ou plusieurs surfaces de chevauchement positionnées pour s'opposer à l'écoulement de la poudre provenant de la chambre de broyage (02) vers l'évacuation extérieure présentent des zones de forme plane et de préférence rectangulaire, conçues de manière à couvrir partiellement ou totalement l'orifice de sortie de ladite chambre de broyage utile au passage de l'écoulement des poudres, ladite zone étant obtenue au moyen d'au moins une coupe, de préférence pour créer une languette de forme rectangulaire (0810 ; 0820) de façon à avoir au moins un orifice de passage, éventuellement sous forme d'un biseau triangulaire (0811, 0812 ; 0821, 0822) d'au moins un angle de ladite languette.

7. Dispositif de transformation des grains de café selon une ou plusieurs des revendications précédentes, **caractérisé en ce que** la poudre de café est produite de manière répétée dans une quantité prédéterminée, également définie comme dose, ledit dispositif étant pourvu d'un mécanisme de contrôle du poids de ladite dose de café moulu, comprenant :
- une fourche de support d'un porte-filtre destiné à être chargé de café moulu, ladite fourche de support étant de préférence positionnée à proximité de ladite ou desdites sorties,
- une cellule de charge reliée mécaniquement à ladite fourche,
- un microprocesseur qui commande le fonctionnement des broyeurs afin de déterminer la dose finale de café moulu souhaitée à l'intérieur dudit porte-filtre, de préférence au moyen d'un micro-logiciel de commande contenu dans ledit microprocesseur.
